# EUROPÄISCHE PATENTSCHRIFT

(11) **EP 0 525 290 B1**
(45) Veröffentlichungstag und Bekanntmachung des Hinweises auf die Patenterteilung: **20.12.1995**
(21) Anmeldenummer: 92103716.4
(22) Anmeldetag: 05.03.1992
(51) Int. Cl.: F15B 15/08, F16J 15/32

(54) **Dichtungsanordnung**
Seal arrangement
Dispositif d'étanchéité

(30) Priorität: 24.07.1991 DE 4124531
(43) Veröffentlichungstag der Anmeldung: 03.02.1993
(73) Patentinhaber: Firma Carl Freudenberg, 69469 Weinheim (DE)
(72) Erfinder: Wüstenhagen, Ulrich, W-3578 Schwalmstadt-Allendorf (DE); Barillas, Gonzalo, W-3570 Stadtallendorf (DE)

(56) Entgegenhaltungen:
- EP-A- 0 033 541
- DE-U- 1 934 382
- GB-A- 898 282

## Beschreibung

Die Erfindung betrifft eine Dichtungsanordnung, umfassend einen in einem Hohlzylinder angeordneten Kolben, der eine Längsauftrennung des Hohlzylinders mit einem Quervorsprung durchgreift und der durch Dichtringe mit einer Dichtlippe aus polymerem Werkstoff gegenüber dem Hohlzylinder und einem die Längsauftrennung überdeckenden Dichtband abgedichtet ist, die an den Enden des Kolbens angeordnet sind.

Eine solche Dichtungsanordnung ist aus der JP-62-184 208 bekannt. Dabei ist allerdings zu beachten, daß die Dichtungen, die im Kolben axial benachbart eingesetzt sind, im Bereich der Längsauftrennung in radialer Richtung verformt werden, um eine Abdichtung zu gewährleisten. Die Gebrauchsdauer dieser Anordnung wird durch die Verwendung mehrerer in axialer Richtung benachbarter Dichtungen vergrößert, wodurch sich allerdings eine vergleichsweise große Baulänge des Kolbens in axialer Richtung ergibt. Durch Verwendung mehrerer Dichtungen tritt außerdem eine erhebliche Haft- und Gleitreibung auf, was eine schwergängige Bewegung des Kolbens bedingt.

Eine weitere Dichtungsanordnung ist aus der EP-A-033 541 bekannt. Die Dichtringe sind im wesentlichen U-förmig ausgebildet und axial in Richtung des abzudichtenden Raums geöffnet. Im Bereich der Längsauftrennung des Hohlzylinders sind die Dichtringe abgeflacht. Der in der vorbekannten Dichtungsanordnung gezeigte Dichtring weist im Überegangsbereich zwischen dem Dichtband und dem Hohlzylinder keine Vergrößerung seines Ringdurchmessers auf.

Der Erfindung liegt die Aufgabe zugrunde, eine Dichtungsanordnung der eingangs genannten Art derart weiterzuentwickeln, daß sich eine leichtgängige Bewegung des Kolbens in axialer Richtung, auch im Niederdruckbereich ergibt, in dem sowohl die Haft- als auch die Gleitreibung zwischen den Dichtringen und Hohlzylinder sowie Dichtband deutlich reduziert wird und daß sich die Dichtungsanordnung durch gute Gebrauchseigenschaften während einer langen Gebrauchsdauer auszeichnet.

Diese Aufgabe wird mit den kennzeichnenden Merkmalen von Patentanspruch 1 gelöst. Auf vorteilhafte Ausgestaltungen nehmen die Unteransprüche bezug.

Bei der erfindungsgemäßen Dichtungsanordnung ist der Dichtring durch eine Verdrehsicherung unverdrehbar auf dem Kolben festgelegt und der Dichtring weist einen Querschnitt auf, der nur im Bereich der Übergangszone zwischen dem Dichtband und dem Hohlzylinder größer ist als in den übrigen Umfangsbereichen und/oder die Dichtlippe ist nur im Bereich der Übergangszone in axialer Richtung kürzer und/oder dicker als in den übrigen Umfangsbereichen.

Die Verdrehsicherung, die beispielsweise durch einen Zentrierwulst gebildet sein kann, bedingt eine exakte Zuordnung der Dichtringe zum Kolben. Bei einer Verkürzung der Dichtlippe nur im Bereich der Übergangszone zwischen dem Dichtband und den Hohlzylinder ist diese gleichmäßig ineinander übergehend mit der Dichtlippe in den übrigen Umfangsbereichen ausgeführt. Durch die Vergrößerung des Querschnittes des Dichtringes und/oder die Verkürzung und/oder Verdickung der Dichtlippe ergibt sich im Bereich der Übergangszonen genau in diesem Bereich eine relativ höhere Anpressung der Dichtlippe an das Dichtband und den Hohlzylinder, wodurch eine ausgezeichnete Dichtwirkung erzielbar ist. Dies hat den Vorteil, daß in den übrigen Umfangsbereichen, in denen die Anpressung geringer ist als im Bereich der Übergangszone die Leichtgängigkeit des Kolbens insbesondere auch im Niederdruckbereich verbessert werden kann. Stick-Slip-Effekte, die durch erhebliche Haftreibung auftreten, werden somit praktisch ausgeschlossen.

Darüberhinaus ist es vorgesehen, daß der Dichtring ein im wesentlichen U-förmiges Profil aufweist, welches in einer sich parallel zu seiner Achse erstreckenden Richtung geöffnet ist.

Dieses Profil ermöglicht eine besonders einfache und in wirtschaftlicher Hinsicht kostengünstige Herstellbarkeit des Dichtringes mit verschieden großen Querschnitten. Die verschieden großen Querschnitte können beispielsweise dadurch realisiert werden, daß im Bereich der Übergangszone die Öffnung des U-förmigen Profils in axialer und/oder radialer Richtung geringer ist als in den Bereichen, in denen eine geringere Anpressung ausreichend ist. Als weitere Ausgestaltung kann beispielsweise eine partielle Verstärkung der Dichtlippe vorgesehen sein, um genau im Bereich der Übergangszonen eine verstärkte Anpressung der Dichtlippe an das Dichtband zu gewährleisten. In Abhängigkeit von der Gestaltung des Profils kann die Anpreßkraft in radialer Richtung in verschiedenen Umfangsbereichen des Dichtringes verschieden groß vorgesehen sein.

Die Dichtlippe kann eine Dichtkante mit gerundetem Profil aufweisen. Hierbei ist von Vorteil, daß sich im Vergleich zu scharfkantig ausgeführten Dichtkanten wesentlich verbesserte Gebrauchseigenschaften während einer längeren Gebrauchsdauer ergeben sowie eine größere Leichtgängigkeit des Kolbens durch weniger Haft- und Gleitreibung.

Zur weiteren Verbesserung der Gebrauchsdauer und weiteren Reduzierung der Reibung zwischen den Dichtungen und dem Hohlzylinder sowie dem Dichtband können die Dichtlippen wenigstens eine konzentrisch umlaufende Eintiefung aufweisen, die auf der druckabgewandten Seite der Dichtkante angeordnet ist. Diese Eintiefungen können als Fettdepot genutzt werden und bewirken eine gute Schmierung im Bereich der Reibstellen. Zur Schmierung kann ein Fett verwendet werden, das im Bereich der Reibstellen eine besonders gute Haftwirkung aufweist. Die Dichtungsanordnung ist dadurch weitgehend wartungsfrei und ermöglicht eine hohe Laufleistung des Kolbens und der Dichtungsanordnung bei vergleichsweise hohen Kolbengeschwindigkeiten.

Gemäß einer vorteilhaften Ausgestaltung ist vorgesehen, daß die Verdrehsicherung zumindest teilweise im Bereich zwischen den Übergangszone angeordnet ist. Hierbei ist von hervorzuhebender Bedeutung, daß gerade in diesem Bereich bei einer erfindungsgemäßen Ausgestaltung der Dichtungsanordnung eine exakte Zuordnung der Dichtungsbereiche mit größerem Querschnitt zu den Übergangszonen zwischen dem Dichtband und dem Hohlzylinder gegeben ist. Eine relative Verschiebung dieser Bereiche zueinander ist auch bei langer Gebrauchsdauer und einer Erwärmung der Dichtungsanordnung nicht zu beobachten. Die Verdrehsicherung kann sowohl an der druckabgewandten als auch an der durckzugewandten Seite der Dichtung angeordnet sein und aus einer Erhebung, beispielsweise in Form eines Zentrierwulstes oder einer Vertiefung, beispielsweise in Form einer Ausnehmung gebildet sein.

Insgesamt ergibt sich eine Dichtungsanordnung mit ausgezeichneten Gebrauchseigenschaften über eine lange Gebrauchsdauer aufgrund der exakten Zuordnung des Dichtringes zu dem Kolben sowie den vergrößerten Querschnitten der Dichtringe nur im Bereich der Übergangszonen. Die Dichtungsanordnung bewirkt eine große Leichtgängigkeit durch geringe Haft- und Gleitreibung, wodurch die Dichtungsanordnung auch im Niederdruckbereich ausgezeichnet zur Anwendung gelangen kann.

Der Gegenstand der vorliegenden Erfindung wird nachfolgend anhand der Zeichnungen weiter erläutert. Die Zeichnungen stellen lediglich Ausführungsbeispiele der erfindungsgemäßen Dichtungsanordnung dar und zeigen die zu berücksichtigenden Einzelkomponenten teilweise im schematischer Darstellung.

Fig. 1 zeigt einen Ausschnitt aus einer Dichtungsanordnung gemäß der vorliegenden Erfindung.
In den Fig. 2 und 2a ist jeweils eine Dichtungsanordnung gemäß Fig. 1 in quergeschnittener Darstellung entlang der Linie C - C gezeigt.

Die Fig. 3 bis 5 und 3a bis 5a zeigen jeweils einen Dichtring, der in der erfindungsgemäßen Dichtungsanordnung zur Anwendung gelangt, jeweils in einer Ansicht und zwei Schnitten.

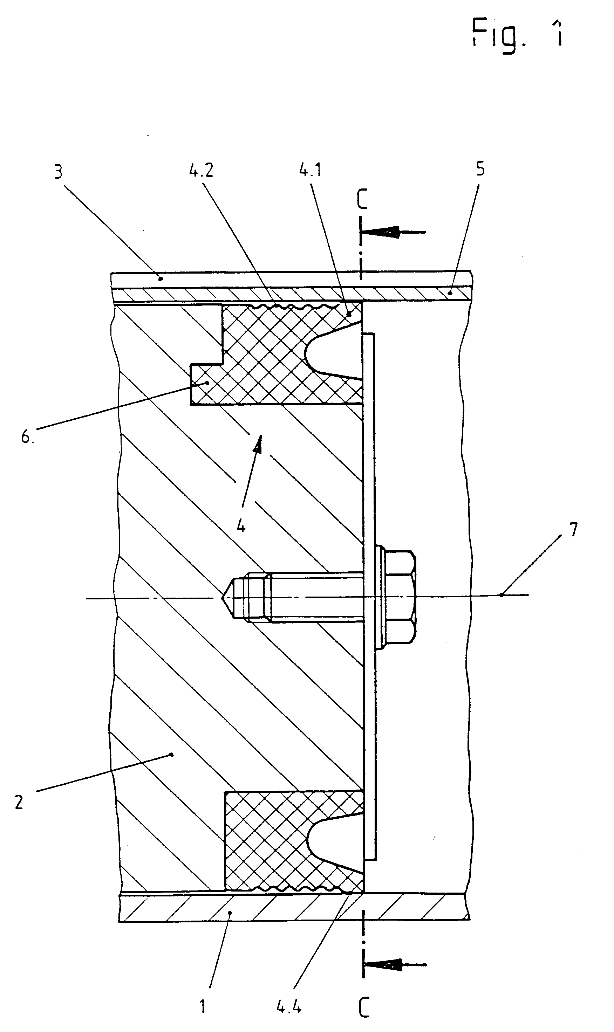

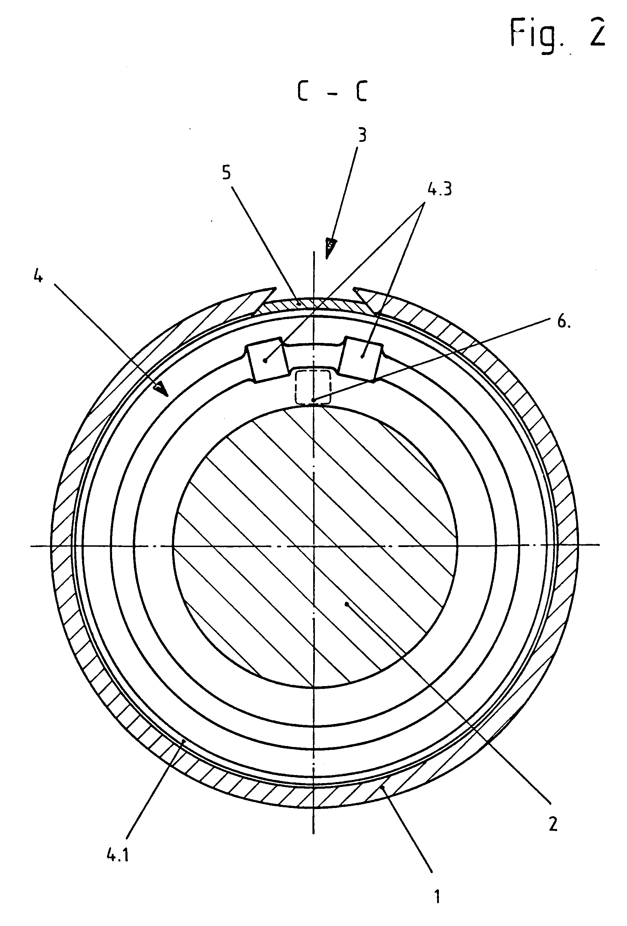

Fig. 1 zeigt einen Ausschnitt aus einer Dichtungsanordnung gemäß der vorliegenden Erfindung. Die Dichtungsanordnung umfaßt dabei einen Hohlzylinder 1 in dem ein Kolben 2 angeordnet ist. Der Hohlzylinder 1 weist eine Längsauftrennung 3 auf, die von einem hier nicht dargestellten Quervorsprung des Kolbens 2, durchgriffen ist. Der Hohlzylinder 1 ist durch Dichtringe 4 mit einer Dichtlippe 4.1, die aus polymerem Werkstoff besteht, gegenüber dem Hohlzylinder 1 und einem die Längsauftrennung 3 überdeckenden Dichtband 5 abgedichtet. Die Dichtringe 4 sind in axialer Richtung an den Enden des Kolbens 2 unverdrehbar festgelegt. Die Verdrehsicherung 6, die diese unverdrehbare Festlegung der beiden Teile zueinander bewirkt, besteht in diesem Fall aus einem Zentrierwulst, der in axialer Richtung in eine Ausnehmung des Kolbens 2 eingreift. Die Dichtringe weisen ein U-förmiges Profil und eine Dichtkante 4.4 mit gerundetem Profil auf. Die um die Dichtlippe 4.1 konzentrisch umlaufenden Eintiefungen 4.2 sind auf der druckabgewandten Seite der Dichtkante 4.4 angeordnet, dienen als Fettdepot und sorgen für eine gute Schmierung der Dichtungsanordnung und geringen Verschleiß.

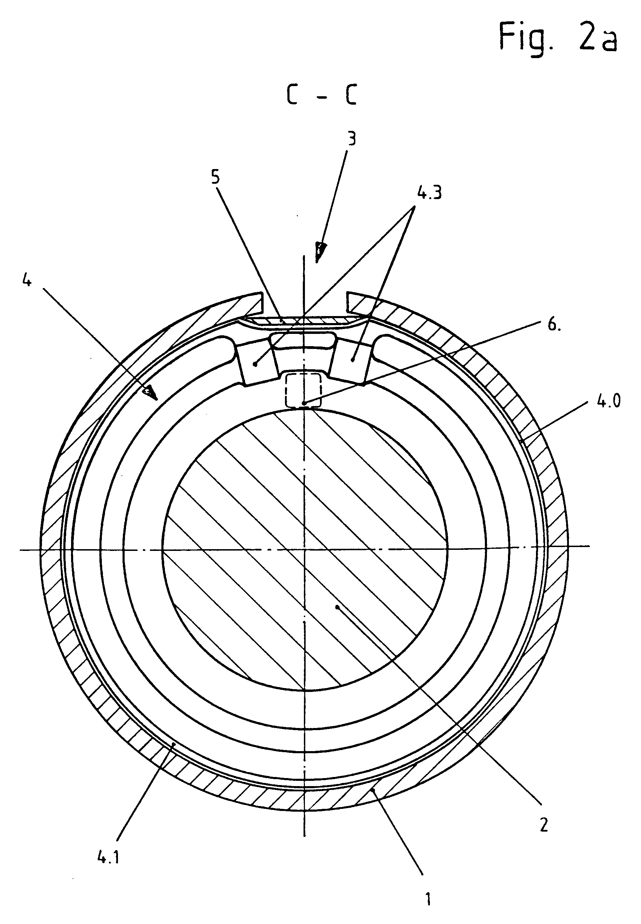

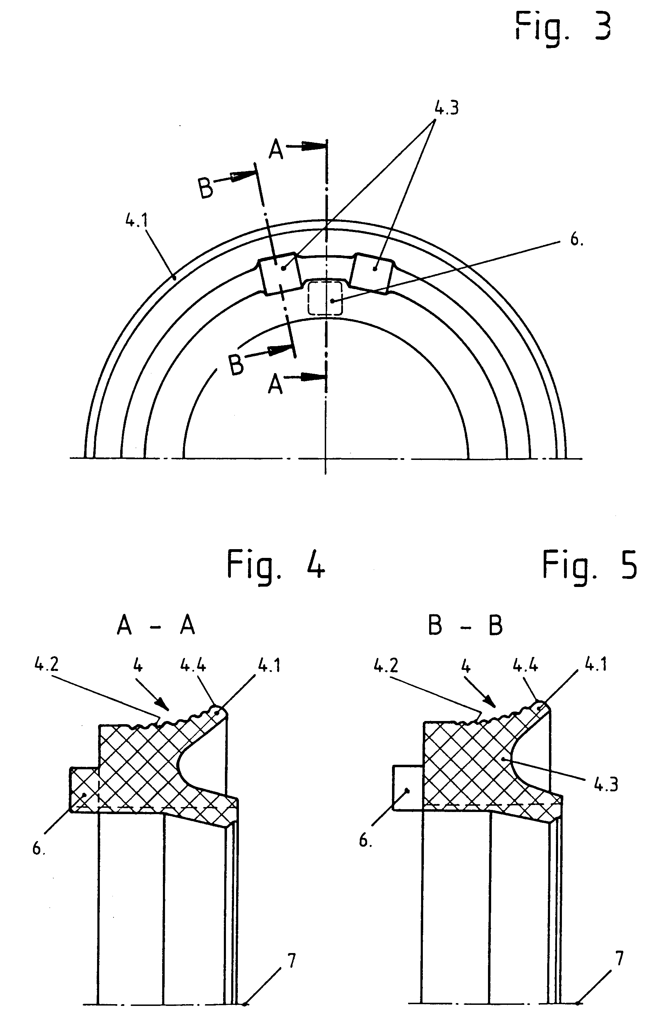

In den Fig. 2 und 2a ist jeweils eine Dichtungsanordnung gemäß Fig. 1 in quergeschnittener Darstellung entlang der Linie C - C gezeigt. In diesen Darstellungen ist zu erkennen, daß der Hohlzylinder 1 eine Längsauftrennung 3 aufweist und die Längsauftrennung 3 von einem Dichtband 5 in Richtung des Kolbens 2 überdeckt ist. Das Dichtband 5 kann innerhalb der Längsauftrennung 3 unterschiedlich angeordnet sein und beispielsweise aus metallischem Werkstoff bestehen. Desweiteren ist die Dichtkante 4.4 der Dichtlippe 4.1 zu sehen, die die Längsauftrennung 3 des Hohlzylinders 1 sowie das Dichtband 5 abdichtet. Die Querschnittserweiterungen 4.3 des Dichtringes sind nur im Bereich der Übergangszone zwischen dem Dichtband 5 und dem Hohlzylinder 1 angeordnet. Die übrigen Umfangsbereiche weisen einen demgegenüber verringerten Querschnitt auf, was eine größere Leichtgängigkeit der Dichtungsanordnung bedingt. Die Querschnittserweiterungen 4.3 bewirken eine in der Übergangszone vergrößerte Anpressung der Dichtlippe 4.1 sowohl an den Hohlzylinder 1 als auch an das Dichtband 5 und bewirken dadurch eine sichere Abdichtung des Hohlzylinders 1 zur Umgebung hin. Die Verdrehsicherung 6 in Form eines Zentrierwulstes ist im Bereich zwischen den Übergangszonen und zwischen den beiden Querschnittserweiterungen 4.3 angeordnet. Auch bei beispielsweise wärmebedingten Veränderungen des Dichtringes bleibt eine einwandfreie Zuordnung der Querschnittserweiterungen 4.3 zu der Übergangszone zwischen dem Dichtband 5 und dem Hohlzylinder 1 erhalten.

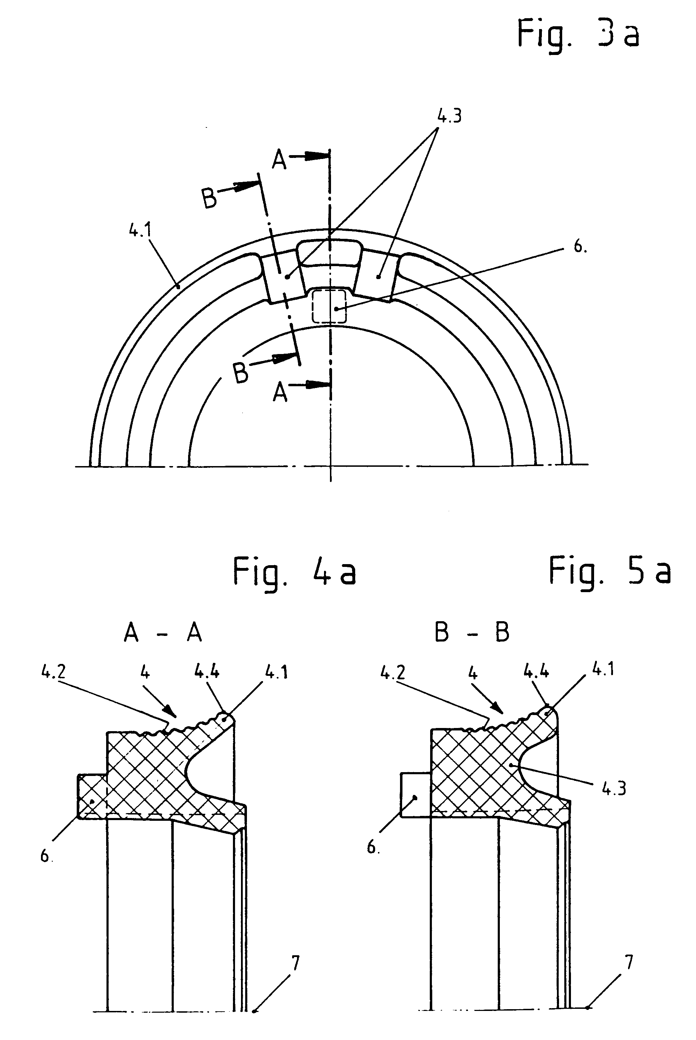

Die Fig. 3 bis 5 und 3a bis 5a zeigen die Dichtringe gemäß der Fig. 2 und 2a aus der erfindungsgemäßen Dichtungsanordnung.

In den Fig. 3 und 3a ist eine Ansicht der Dichtung gezeigt, wie sie bei der Dichtungsanordnung gemäß der Fig. 1, 2 und 2a zur Anwendung gelangt.

Fig. 4 und 4a zeigen einen Schnitt entlang der Linie A - A durch den Dichtring 4. Dabei ist die einstückig mit dem Dichtring 4 ausgebildete Verdrehsicherung 6 zu erkennen, die im eingebauten Zustand des Dichtringes 4 in axialer Richtung in eine Ausnehmung des Kolbens eingreift. Die Dichtlippe 4.1, die eine Dichtkante 4.4 mit gerundetem Profil aufweist sowie Eintiefungen 4.2, die als Fettdepot genutzt werden können, weist einen geringeren Querschnitt auf, als der in Fig. 5 und 5a gezeigte Schnitt durch die Dichtung aus den Fig. 3 und 3a gemäß der Linie B -B.

In den Fig. 5 und 5a, in denen der Dichtring aus den Fig. 3 und 3a entlang der Linie B - B geschnitten dargestellt ist, ist zu erkennen, daß durch die Querschnittserweiterung 4.3 die Schenkel des U-förmigen Profils im Vergleich zu dem in Fig. 4 dargestellten Schnitt deutlich verkürzt sind. Auch eine zusätzliche Verstärkung der Dichtlippe 4.1 ist denkbar, um die Dichtwirkung im Bereich des Dichtbandes 5 zu verbessern. Dieser größere Querschnitt im Bereich der Übergangszone zwischen dem Dichtband 5 und dem Hohlzylinder 1 bewirkt eine größere Anpressung der Dichtlippe 4.1 genau in diesen Bereichen. Die übrigen Umfangsbereiche weisen einen geringeren Querschnitt, wie beispielsweise in den Fig. 4 und 4a dargestellt, auf und bewirken die vorteilhaften, guten Gebrauchseigenschaften der erfindungsgemäßen Dichtungsanordnung.

## Patentansprüche

1. Dichtungsanordnung, umfassend einen in einem Hohlzylinder (1) angeordneten Kolben (2), der eine Längsauftrennung (3) des Hohlzylinders (1) mit einem Quervorsprung durchgreift und der durch Dichtringe (4) mit einer Dichtlippe (4.1) aus polymerem Werkstoff gegenüber dem Hohlzylinder (1) und einem die Längsauftrennung (3) überdeckenden Dichtband (5) abgedichtet ist, die an den Enden des Kolbens (2) angeordnet sind, dadurch gekennzeichnet, daß der Dichtring (4) durch eine Verdrehsicherung (6) unverdrehbar auf dem Kolben (2) festgelegt ist und daß der Dichtring (4) einen axialen Querschnitt aufweist, der nur im Bereich der Übergangszone zwischen dem Dichtband (5) und dem Hohlzylinder (1) in Richtung des Ringdurchmessers größer ist, als in den übrigen Umfangsbereichen und daß die Dichtlippe (4.1) nur im Bereich der Übergangszone in axialer Richtung kürzer und/oder dicker ist, als in den übrigen Umfangsbereichen.

2. Dichtungsanordnung nach Anspruch 1, dadurch gekennzeichnet, daß der Dichtring (4) ein im wesentlichen U-förmiges Profil aufweist, welches in einer sich parallel zu seiner Achse (7) erstreckenden Richtung geöffnet ist.

3. Dichtungsanordnung nach Anspruch 1 bis 2, dadurch gekennzeichnet, daß die Dichtlippe (4.1) eine Dichtkante (4.4) mit gerundetem Profil aufweist.

4. Dichtungsanordnung nach Anspruch 1 bis 3, dadurch gekennzeichnet, daß die Dichtlippe (4.1) wenigstens eine konzentrisch umlaufende Eintiefung (4.2) aufweist, die auf der druckabgewandten Seite der Dichtkante (4.4) angeordnet ist.

5. Dichtungsanordnung nach Anspruch 1 bis 4, dadurch gekennzeichnet, daß die Verdrehsicherung (6) zumindest teilweise im Bereich zwischen den Übergangszonen angeordnet ist.

## Claims

1. A sealing device, comprising a piston (2) disposed in a hollow cylinder (1), which piston passes with a transverse projection through a longitudinal slit (3) in the hollow cylinder (1) and is sealed against the hollow cylinder (1) and against a sealing tape (5) covering the longitudinal slit (3) by sealing rings (4) having a sealing lip (4.1) made from polymer material, which sealing rings are disposed at the ends of the piston (2), characterized in that the sealing ring (4) is secured non-twistably on the piston (2) by a twist-protection device (6), and in that the sealing ring (4) has an axial cross-section which solely in the region of the transition zone between the sealing tape (5) and the hollow cylinder (1) is larger in the direction of the ring diameter than in the other peripheral regions, and in that the sealing lip (4.1) solely in the region of the transition zone is shorter and/or thicker in the axial direction than in the other peripheral regions.

2. A sealing device according to claim 1, characterized in that the sealing ring (4) has an essentially U-shaped profile, which is opened in a direction extending parallel to its axis (7).

3. A sealing device according to any of claims 1 and 2, characterized in that the sealing lip (4.1) has a sealing edge (4.4) of rounded profile.

4. A sealing device according to any of claims 1 to 3, characterized in that the sealing lip (4.1) has at least one concentrically skirting depression (4.2) which is disposed on that side of the sealing edge (4.4) facing away from the pressure.

5. A sealing device according to any of claims 1 to 4, characterized in that the twist-protection device (6) is disposed at least partially in the region between the transition zones.

## Revendications

1. Dispositif d'étanchéité, comprenant un piston (2) disposé dans un cylindre creux (1), qui pénètre une coupure longitudinale (3) du cylindre creux (1) avec une saillie transversale et qui est rendu étanche par rapport au cylindre creux (1) et par rapport à une bande d'étanchéité (5) recouvrant la coupure longitudinale (3), par des bagues d'étanchéité (4) comportant une lèvre d'étanchéité (4.1) en matériau polymère, qui sont disposées aux extrémités du piston (2), caractérisé en ce que la bague d'étanchéité (4) est fixée sans torsion possible sur le piston (2) grâce à un dispositif de sécurité contre les torsions (6) et en ce que la bague d'étanchéité (4) présente une section axiale qui dans la seule partie de la zone de transition entre la bande d'étanchéité (5) et le cylindre creux (1) dans le sens du diamètre de la bague est plus grande que dans les autres parties périphériques et en ce que la lèvre d'étanchéité (4.1) est dans la seule partie de la zone de transition dans le sens axial plus courte et/ou plus épaisse que dans les autres parties périphériques.

2. Dispositif d'étanchéité selon la revendication 1, caractérisé en ce que la bague d'étanchéité (4) présente un profil essentiellement en forme de U, lequel est ouvert dans un sens qui s'étend de manière parallèle à son axe (7).

3. Dispositif d'étanchéité selon l'une des revendications 1 et 2, caractérisé en ce que la lèvre d'étanchéité (4.1) présente une arête d'étanchéité (4.4) de profil arrondi.

4. Dispositif d'étanchéité selon l'une des revendications 1 à 3, caractérisé en ce que la lèvre d'étanchéité (4.1) comporte au moins une gorge (4.2) continue concentrique qui est disposée sur le côté opposé à la pression de l'arête d'étanchéité (4.4).

5. Dispositif d'étanchéité selon l'une des revendications 1 à 4, caractérisé en ce que le dispositif de sécurité contre les torsions (6) est disposé au moins partiellement dans la partie entre les zones de transition.
